# EUROPEAN PATENT APPLICATION

(11) **EP 2 334 135 A1**
(43) Date of publication of application: **15.06.2011**
(21) Application number: 09814692.1
(22) Date of filing: 18.09.2009
(51) Int. Cl.: H04W 72/08, H04W 72/04

(54) **MOBILE COMMUNICATION METHOD, MOBILE COMMUNICATION SYSTEM, AND RADIO BASE STATION**

(30) Priority: 22.09.2008 JP 2008242652
(71) Applicant: NTT DOCOMO, INC., Chiyoda-ku Tokyo 100-6150 (JP)
(72) Inventor: MORIMOTO, Akihito, Tokyo 100-6150 (JP); KISHIYAMA, Yoshihisa, Tokyo 100-6150 (JP); TANNO, Motohiro, Tokyo 100-6150 (JP); SAWAHASHI, Mamoru, Tokyo 100-6150 (JP)
(74) Representative: HOFFMANN EITLE
(86) International application number: PCT/JP2009/066434
(87) International publication number: WO 2010/032848

(57) **Abstract**

A mobile communication method according to the present invention includes the steps of: determining, at a mobile station, a first cell with the largest interference amount among a plurality of cells in accordance with reception quality of a reference signal in the plurality of cells, when radio links are established between the mobile station and the plurality of cells; transmitting, from the mobile station to the plurality of cells, identification information of the first cell; and scheduling, at a radio base station which manages each of the plurality of cells, to transmit a data signal addressed to the mobile station via a resource that is unusable by the first cell.

## Description

### TECHNICAL FIELD

The present invention relates to a mobile communication method, a mobile communication system and a radio base station.

### BACKGROUND ART

In mobile communication systems of the LTE (Long Term Evolution) scheme which is currently under standardization in the 3GPP, the same frequency is configured to be used repeatedly in a plurality of cells.

### SUMMARY OF THE INVENTION

### PROBLEMS TO BE SOLVED BY THE INVENTION

Such mobile communication systems which are configured to use the same frequency repeatedly in a plurality of cells, however, have an interference ("inter-cell interference") problem which may occur between adjacent cells.

This problem is especially significant in mobile communication systems in which each radio base station eNB is configured to determine a frequency to be used in cells under the control of the radio base station eNB, in an autonomously distributed manner.

The present invention is made in view of the above-described problem and an object thereof is to provide a mobile communication method, a mobile communication system and a radio base station capable of reducing an inter-cell interference in mobile communication systems which are configured to use the same frequency repeatedly in a plurality of cells.

### MEANS FOR SOLVING THE PROBLEM

A first aspect of the present invention is summarized as a mobile communication method including the steps of: determining, at a mobile station, a first cell with the largest interference amount among a plurality of cells in accordance with reception quality of a reference signal in the plurality of cells, when radio links are established between the mobile station and the plurality of cells; transmitting, from the mobile station to the plurality of cells, identification information of the first cell; and scheduling, at a radio base station which manages each of the plurality of cells, to transmit a data signal addressed to the mobile station via a resource that is unusable by the first cell.

A second aspect of the present invention is summarized as a mobile communication system comprising a mobile station capable of establishing radio links with a plurality of cells, and a radio base station which manages each of the plurality of cells, wherein: the mobile station includes: a reception quality measuring unit configured to determine a first cell with the largest interference amount among a plurality of cells in accordance with reception quality of a reference signal in the plurality of cells, when radio links are established between the mobile station and the plurality of cells; and a transmitting unit configured to transmit, to the plurality of cells, identification information of the first cell; the radio base station includes: a scheduling unit configured to transmit a data signal addressed to the mobile station via a resource that is unusable by the first cell.

A third aspect of the present invention is summarized as a radio base station including a scheduling unit configured to perform downlink scheduling, wherein, when the scheduling unit receives identification information of a first cell as a cell with the largest interference amount among a plurality of cells from a mobile station having radio links established between the mobile station and a plurality of cells, the scheduling unit is configured to transmit a data signal addressed to the mobile station via a resource that is unusable by the first cell.

### EFFECT OF THE INVENTION

As described above, according to the present invention, a mobile communication method, a mobile communication system and a radio base station capable of reducing an inter-cell interference in mobile communication systems which are configured to use the same frequency repeatedly in a plurality of cells can be provided.

### BRIEF DESCRIPTION OF THE DRAWINGS

[Fig. 1] Fig. 1 is a diagram of an entire configuration of a mobile communication system according to a first embodiment of the present invention.
[Fig. 2] Fig. 2 is a functional block diagram of the mobile station according to the first embodiment of the present invention.
[Fig. 3] Fig. 3 is a functional block diagram of a radio base station according to the first embodiment of the present invention.
[Fig. 4] Fig. 4 is a diagram illustrating a method for transmitting a data signal by a radio base station according to the first embodiment of the present invention.
[Fig. 5] Fig. 5 is a flowchart illustrating an operation of a mobile station according to the first embodiment of the present invention.

### BEST MODES FOR CARRYING OUT THE INVENTION

### (Configuration of mobile communication system according to first embodiment of the present invention)

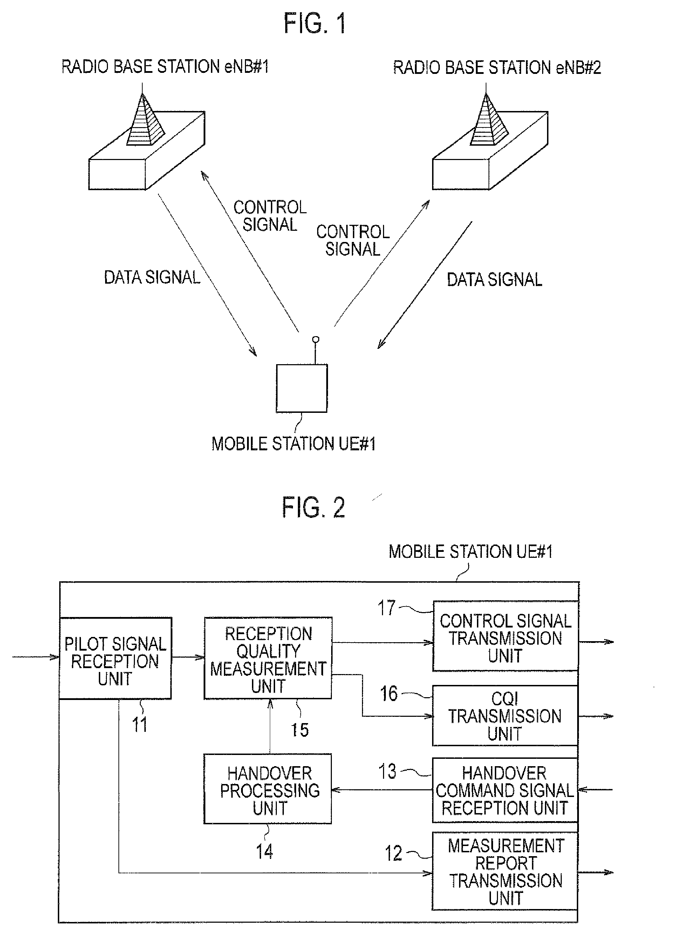

With reference to Figs. 1 to 4, a configuration of a mobile communication system according to a first embodiment of the present invention will be described.

As illustrated in Fig. 1, in the mobile communication system according to this embodiment, the LTE scheme is adopted. A plurality of radio base stations eNB are configured to control a mobile communication at each mobile station UE (for example, a mobile station UE#1) in an autonomously distributed manner, by exchanging a control signal with each other via a Backhaul line.

The present invention can be adaptable not only to the mobile communication system in which the LTE scheme is adopted but also to a mobile communication system in which communication systems other than the LTE scheme are adopted.

As illustrated in Fig. 2, a mobile station UE#1 (hereinafter, UE) according to this embodiment includes: a pilot signal reception unit 11; a measurement report transmission unit 12; a handover command signal reception unit 13; a handover processing unit 14; a reception quality measurement unit 15; a CQI transmission unit 16; and a control signal transmission unit 17.

The pilot signal reception unit 11 is configured to receive a pilot signal (RS: Reference Signal) transmitted by one or a plurality of cells in which a radio link (specifically, an RRC connection) is established by the mobile station UE.

The pilot signal reception unit 11 is configured to receive a pilot signal of a cell that is a measurement object designated by a radio access network apparatus (specifically, a radio base station eNB).

The measurement report transmission unit 12 is configured to measure a reception quality measured by the pilot signal reception unit 11, based on a reporting criteria designated by the radio access network apparatus (specifically, the radio base station eNB), and to transmit a measurement report intended to notify such measurement result.

Herein, the reception quality measured by the measurement report transmission unit 12 may include an RSRQ (Reference Signal Received Quality), an RSRP (Reference Signal Received Power), and a reception SIR (Signal to Interference Ratio).

The handover command signal reception unit 13 is configured to receive a handover command signal to command a start of handover, from the radio access network apparatus (specifically, the radio base station eNB).

The handover processing unit 14 is configured to perform a handover process, based on the handover command signal received by the handover command signal reception unit 13.

The reception quality measurement unit 15 is configured to measure the reception quality of the pilot signal transmitted by each of the plurality of cells, when the radio link is established with the plurality of cells by the mobile station UE, i.e., when the mobile station UE is in a soft handover state.

In this case, the reception quality measured by the reception quality measurement unit 15 may include RSRQ, RSRP, reception SIR, etc., similarly to the reception quality measured by the measurement report transmission unit 12.

The reception quality measurement unit 15 is configured to determine, in accordance with the reception quality of the above-described pilot signals, a first cell with the largest interference amount among the plurality of cells.

The CQI transmission unit 16 is configured to transmit, to each of the above-described plurality of cells, a channel quality indicator (CQI) corresponding to the reception quality of the pilot signals measured by the reception quality measurement unit 15.

The control signal transmission unit 17 is configured to transmit, to each of the above-described plurality of cells, control signals including identification information of the first cell determined by the reception quality measurement unit 15.

The control signal transmission unit 17 may also be configured to transmit the control signals including the identification information of the first cell, only when the interference amount/reception quality from the first cell exceeds a predetermined threshold.

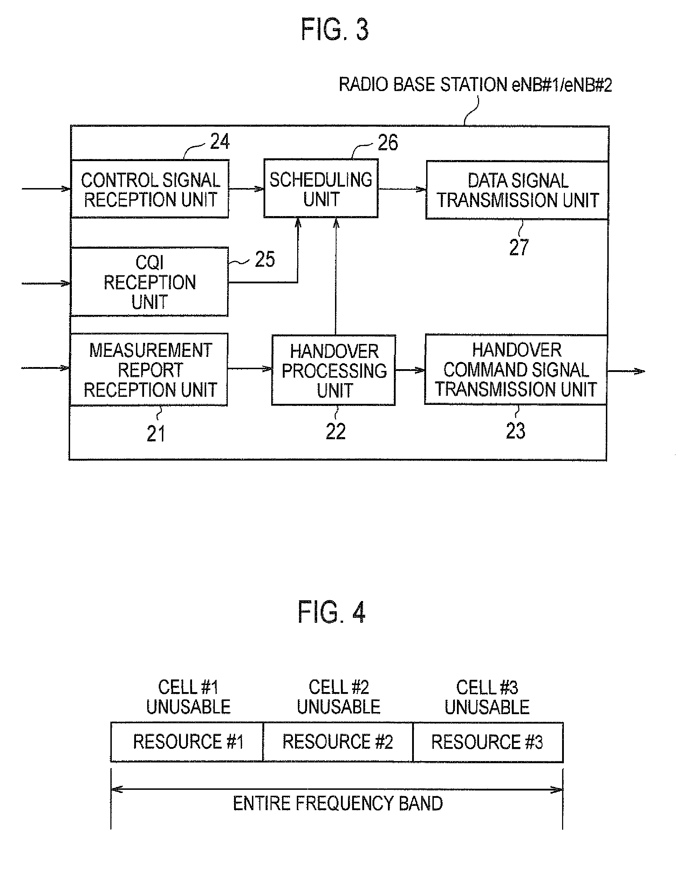

As illustrated in Fig. 3, a radio base station eNB#1/eNB#2 (hereinafter, eNB) according to this embodiment includes: a measurement report reception unit 21; a handover processing unit 22; a handover command signal transmission unit 23; a control signal reception unit 24; a CQI reception unit 25; a scheduling unit 26; and a data signal transmission unit 27.

The measurement report reception unit 21 is configured to receive a measurement report transmitted by the mobile station UE in which the radio link is established with a cell under the control of the radio base station eNB.

The handover processing unit 22 is configured to determine whether or not the above-described mobile station UE should start a handover, based on the measurement report received by the measurement report reception unit 21.

The handover processing unit 22 may be configured to determine whether or not the above-described mobile station UE should start a handover, according to a "cell edge identifier" received from another radio base station.

In this case, the "cell edge identifier" is an identifier indicating that each mobile station UE is present at a cell edge, and is notified to a particular radio base station eNB from each mobile station UE. For example, when a difference in the reception quality of pilot signals of two cells remains within a predetermined threshold value, the mobile station UE may determine that the mobile station UE is present at a cell edge, and notify, to the radio base station eNB managing either one of the two cells, the "cell edge identifier" indicating that each mobile station UE is present at the cell edge.

The handover command signal transmission unit 23 is configured to transmit, to the mobile station UE for which the handover processing unit 22 has determined that it should start a handover, a handover command signal indicating that situation.

The control signal reception unit 24 is configured to receive control signals including identification information of the above-described first cell, from the mobile station UE in which a radio link is established with a cell under the control of the radio base station eNB.

The CQI reception unit 25 is configured to receive the above-described CQI, from the mobile station UE in which the radio link is established with the cell under the control of the radio base station eNB.

The scheduling unit 26 is configured to perform downlink scheduling.

Specifically, when the control signal reception unit 24 receives the control signal including identification information of the above-described first cell, from the mobile station UE in which the radio link is established with the cell under the control of the radio base station eNB, the scheduling unit 26 is configured to perform scheduling, in the second cell, to transmit a data signal addressed to the mobile station UE via a resource that is unusable by the first cell.

For example, as illustrated in Fig. 4, the entire frequency band usable in the mobile communication system according to the present embodiment is divided into resources #1 to #3. Here, the resource #1 is unusable by the cell #1, the resource #2 is unusable by the cell #2 and the resource #3 is unusable by the cell #3.

In this case, when the control signal reception unit 24 receives the control signals including the identification information of the cell #1 as the identification information of the above-described first cell, from a mobile station UE in which the radio links are established with the cells #1 to #3, the scheduling unit 26 performs scheduling to transmit a data signal addressed to the mobile station UE via the resource #1 which is unusable by the cell #1.

Further, when the control signal reception unit 24 receives the control signals including the identification information of the cell #2 as the identification information of the above-described first cell, from a mobile station UE in which the radio links are established between with the cells #1 to #3, the scheduling unit 26 performs scheduling to transmit a data signal addressed to the mobile station UE via the resource #2 which is unusable by the cell #2.

Further, when the control signal reception unit 24 receives the control signals including the identification information of the cell #3 as the identification information of the above-described first cell, from a mobile station UE in which the radio links are established between with the cells #1 to #3, the scheduling unit 26 performs scheduling to transmit a data signal addressed to the mobile station UE via the resource #3 which is unusable by the cell #3.

Here, the above-described scheduling may be configured to be performed on a resource block basis, each block being constituted by seven OFDM symbols and twelve subcarriers.

The scheduling unit 26 may be configured to preferentially assign a downlink resource to a mobile station UE in which radio links are established between with a plurality of cells, i.e., a mobile station UE in a soft handover state.

The data signal transmission unit 27 is configured to transmit data signals to the mobile station UE via the downlink resource assigned to the mobile station UE by the scheduling unit 26.

### (Operation of mobile communication system according to first embodiment of the present invention)

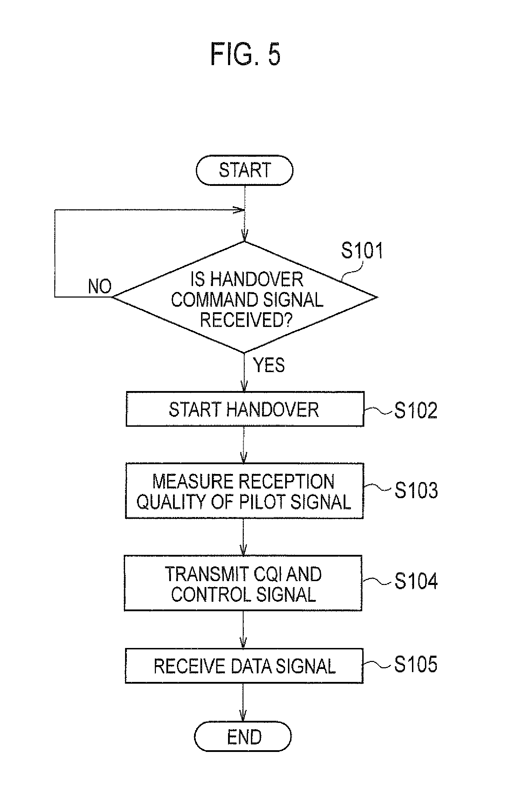

With reference to Fig. 5, an operation of the mobile communication system according to the first embodiment of the present invention which is, specifically, an operation of the mobile station UE will be described.

As illustrated in Fig. 5, at step S101, when the mobile station UE that establishes the radio link with the cell #1 receives the handover command signal from the radio base station eNB managing the cell #1, the operation proceeds to step S102.

At step S102, the mobile station UE starts the handover by establishing the radio link between the cell #1 and the cell #2 according to the handover command signal.

At step S103, the mobile station UE measures the reception quality of the pilot signals in the cell #1 and the cell #2. Here, the mobile station UE detects that an interference amount in the cell #1 is greater than that in the cell #2 in accordance with the measurement result.

In step S104, the mobile station UE transmits, to the cell #1 and the cell #2, a CQI corresponding to the reception quality of the cell #1 and the cell #2, and transmits the control signals including the identification information of the cell #1 as identification information of the first cell with the largest interference amount.

In step S105, the mobile station UE receives the data signals transmitted from the cell #2 via the resource #1 which is unusable by the cell #1.

### (Advantageous effect of mobile communication system according to first embodiment of the present invention)

With the mobile communication system according to the present embodiment, since scheduling is performed to inhibit the cell with the largest interference amount with respect to the mobile station UE from transmitting data signals, when a mobile station UE has radio links established with a plurality of cells, it is possible to reduce an inter-cell interference in mobile communication systems which are configured to use the same frequency repeatedly in a plurality of cells.

The operation of the above-described mobile station UE or radio base station eNB may be implemented by a hardware, may also be implemented by a software module executed by a processor, and may further be implemented by the combination of the both.

The software module may be arranged in a storing medium of an arbitrary format such as RAM(Random Access Memory), a flash memory, ROM(Read Only Memory), EPROM(Erasable Programmable ROM), EEPROM(Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the mobile station UE and the radio base station eNB. As a discrete component, such a storing medium and processor may be arranged in the mobile station UE and the radio base station eNB.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile communication method comprising the steps of:
determining, at a mobile station, a first cell with the largest interference amount among a plurality of cells in accordance with reception quality of a reference signal in the plurality of cells, when radio links are established between the mobile station and the plurality of cells;
transmitting, from the mobile station to the plurality of cells, identification information of the first cell; and
scheduling, at a radio base station which manages each of the plurality of cells, to transmit a data signal addressed to the mobile station via a resource that is unusable by the first cell.

2. A mobile communication system comprising a mobile station capable of establishing radio links with a plurality of cells, and a radio base station which manages each of the plurality of cells, wherein:
the mobile station comprises:
a reception quality measuring unit configured to determine a first cell with the largest interference amount among a plurality of cells in accordance with reception quality of a reference signal in the plurality of cells, when radio links are established between the mobile station and the plurality of cells; and
a transmitting unit configured to transmit, to the plurality of cells, identification information of the first cell;
the radio base station comprises:
a scheduling unit configured to transmit a data signal addressed to the mobile station via a resource that is unusable by the first cell.

3. A radio base station comprising a scheduling unit configured to perform downlink scheduling, wherein,
when the scheduling unit receives identification information of a first cell as a cell with the largest interference amount among a plurality of cells from a mobile station having radio links established between the mobile station and a plurality of cells, the scheduling unit is configured to transmit a data signal addressed to the mobile station via a resource that is unusable by the first cell.
